# FASCICULE DE BREVET EUROPEEN

(11) **EP 2 733 011 B1**
(45) Date de publication et mention de la délivrance du brevet: **27.04.2016**
(21) Numéro de dépôt: 13193667.6
(22) Date de dépôt: 20.11.2013
(51) Int. Cl.: B60M 1/20

(54) **Armement de catenaire**
Anordnung einer Fahrleitung
Fitting of catenary

(30) Priorité: 20.11.2012 FR 1261010
(43) Date de publication de la demande: 21.05.2014
(73) Titulaire: SNCF RESEAU, 75013 Paris (FR); Stratiforme Industries, 59235 Bersee (FR)
(72) Inventeur: Bobillot, Adrien, 75005 Paris (FR); Mentel, Jean-Paul, 78710 Rosny sur Seine (FR); Leblon, Guy, 59283 Raimbeaucourt (FR)
(74) Mandataire: Argyma

(56) Documents cités:
- EP-A1- 0 396 443
- CN-U- 201 907 432
- FR-A- 1 093 266
- JP-A- 2005 008 041

## Description

La présente invention se rapporte au domaine ferroviaire et vise plus particulièrement un dispositif de support d'une caténaire au dessus d'une voie de chemin de fer.

Le document EP0396443 concerne une structure aérienne équipée d'une rondelle élastique périphérique afin de stopper la circulation d'eau le long de la structure aérienne. La rondelle élastique est rapportée sur la structure aérienne.

De manière classique, une voie de chemin de fer comporte des rails longitudinaux, reliés à des traverses transversales, sur lesquels circulent des véhicules ferroviaires en prélevant un courant électrique sur une caténaire placée à quelques mètres au-dessus des rails.

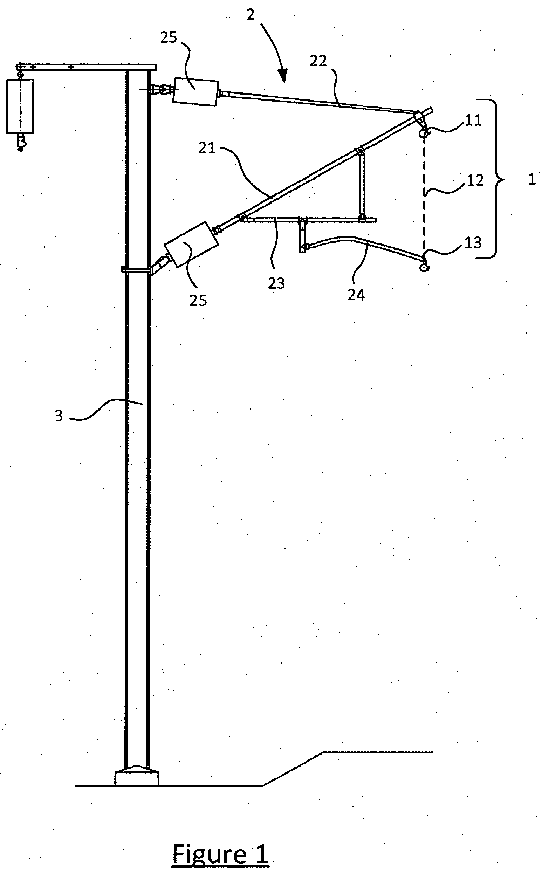

En référence à la figure 1, une caténaire 1 comprend, de manière classique, un câble porteur horizontal 11 sur lequel est suspendu un fil de contact horizontal 13 par l'intermédiaire de pendules verticaux 12. Un véhicule ferroviaire comporte traditionnellement un pantographe (non représenté) monté sur le toit de la motrice électrique du véhicule ferroviaire pour capter le courant électrique circulant dans le fil de contact 13 afin d'alimenter la motrice en énergie électrique au cours de son déplacement sur les rails. Il convient de noter qu'il existe également des caténaires sans câble porteur.

Pour maintenir la caténaire 1 en suspension au-dessus d'une voie ferrée, des dispositifs de support de caténaire 1 sont traditionnellement disposés le long de la voie ferrée. Comme illustré à la figure 1, un dispositif de support caténaire comporte de manière classique un poteau vertical 3 et un armement 2 qui est, d'une part, articulé au poteau 3 et, d'autre part, relié à la caténaire 1.

Comme illustré à la figure 1, un armement caténaire 2 comporte de manière classique :
- une console 21 de forme sensiblement longitudinale dont une première extrémité est articulée au poteau 3 et dont une deuxième extrémité libre est reliée au câble porteur 11 de la caténaire 1,
- un hauban 22 reliant l'extrémité supérieure du poteau 3 à la deuxième extrémité libre de la console 21,
- un antibalaçant 23 monté sur une partie inférieure de la console 21 ; et
- un bras de rappel 24 monté à l'extrémité inférieure de l'antibalançant 23 et relié au fil de contact 13 de la caténaire 1.

Comme la console 21 est articulée au poteau 3, l'angle d'inclinaison entre la console 21 et le poteau 3 peut avantageusement être modifié pour ajuster la hauteur du câble porteur 11 et, par voie de conséquence, la hauteur du fil de contact 13. De manière connue, pour régler l'angle d'inclinaison de la console 21, on modifie la longueur du hauban 22. L'antibalaçant 23 a pour fonction d'empêcher toute inclinaison de la caténaire 1 afin de garantir un captage optimal du courant. Le bras de rappel 24 permet, pour sa part, d'imprimer au fil de contact une forme en zigzag entre les poteaux 3 afin que le fil de contact 13 de la caténaire 1 ne frotte pas toujours au même endroit sur un archet du pantographe.

Lors de son utilisation, la caténaire 1 est alimentée électriquement en courant et possède un potentiel électrique élevé, par exemple 25kV, et il est important que cette dernière soit isolée d'éléments du dispositif de support de caténaire reliés à la masse, c'est-à-dire de potentiel électrique nul, afin d'éviter la formation d'arcs électriques, par exemple, entre le poteau 3, l'armement caténaire 2 et la caténaire 1, et afin d'assurer la sécurité des personnes.

De manière classique, un armement caténaire 2 comporte une console 21 formée à partir de tubes d'acier pour conférer une tenue mécanique importante à l'armement caténaire 2. L'acier étant un métal conducteur, il est nécessaire de prévoir des isolateurs électriques auxiliaires 25 qui sont rapportés sur la console 21 de l'armement caténaire 2. Une telle console possède une masse élevée et nécessite un temps de montage et de réglage important ce qui présente des inconvénients.

Afin d'éliminer ces inconvénients, on connaît, par la demande de brevet FR 1054242 de la société SNCF, un armement caténaire 2 comportant une console 21 réalisée à partir d'un matériau composite isolant afin d'éviter la formation d'un chemin électrique entre la caténaire 1, la console 21 et le poteau 3.

En cas de fortes pluies ou d'humidité importante, des gouttes de pluie se déposent à la surface de la console 21 et ruissellent depuis son extrémité libre jusqu'à son extrémité articulée au poteau 3. L'accumulation de gouttes de pluie peut, dans des situations extrêmes, former une pellicule d'eau sur la console 21. Cette pellicule d'eau est conductrice de courant et peut entraîner la formation d'arcs électriques, d'une part entre la pellicule d'eau et la caténaire 1 et, d'autre part, entre la pellicule d'eau et le poteau 3. Une solution immédiate pour résoudre cet inconvénient serait d'ajouter des isolateurs électriques auxiliaires 25 sur la console 21 comme enseigné dans l'art antérieur mais cette solution présente un temps d'installation et un coût important ce qui n'est pas souhaitable.

Afin d'éliminer au moins certains de ces inconvénients, l'invention concerne un armement de support d'une caténaire comprenant une console dont une partie proximale est adaptée pour être reliée à des moyens de support, notamment un poteau, et dont une partie distale est adaptée pour être reliée à une caténaire, l'armement comportant des moyens d'évacuation de gouttes de pluie intégrés à la console.

Des moyens d'évacuation permettent de manière avantageuse d'éviter la formation d'une pellicule d'eau de pluie sur l'armement caténaire susceptible de favoriser la formation d'arcs électriques avec la caténaire en cas de forte pluie ou de forte humidité. De tels moyens d'évacuation améliorent la sécurité et la durée de vie des dispositifs de support de caténaire.

En outre, la présence de moyens d'évacuation sur la console permet de protéger de manière optimale l'armement caténaire étant donné que la console est la plus susceptible d'accumuler des gouttes d'eau de pluie.

Enfin, comme les moyens d'évacuation sont intégrés et non rapportés sur la console, aucune étape de montage supplémentaire n'est à prévoir ce qui est avantageux lors de l'installation ou de la maintenance.

De préférence, les moyens d'évacuation sont formés sur la partie proximale de la console de manière à favoriser l'évacuation des gouttes de pluie qui ruissellent par gravité de la partie distale de la console à sa partie proximale.

De préférence, les moyens d'évacuation sont formés au moins sur toute la longueur de la console de manière à permettre une évacuation optimale des gouttes de pluie.

De préférence encore, la console comportant une partie inférieure en regard de la caténaire lors de son utilisation, les moyens d'évacuation sont formés sur la partie inférieure de la console.

Sous l'effet de la gravité, les gouttes de pluie ruissellent sur la partie inférieure de la console et sont maintenues à cette dernière du fait de la tension superficielle des gouttes de pluie. L'ajout de moyens d'évacuation sur la partie inférieure de la console permet de limiter la tension superficielle des gouttes de pluie et d'éviter la formation d'une pellicule d'eau de pluie.

De préférence toujours, la console comportant au moins un bord longitudinal inférieur, les moyens d'évacuation comportent une pluralité de dents d'évacuation en saillie depuis ledit bord longitudinal inférieur. Les dents d'évacuation permettent, d'une part, d'accumuler les gouttes de pluie à l'extrémité de chaque dent et, d'autre part, de limiter leur tension superficielle afin de permettre leur détachement de la dent. De préférence, les dents d'évacuation sont directement venues de la matière de la console ce qui facilite leur fabrication et limite leur masse.

Selon un aspect préféré, la longueur d'une dent d'évacuation est comprise entre 10 et 20 mm de manière à favoriser l'évacuation des gouttes de pluie sans augmenter de manière significative la masse de la console. Selon un aspect préféré, les dents d'évacuation sont identiques.

Selon un aspect préféré, les dents d'évacuation sont distantes d'une distance comprise entre 80 mm et 150 mm. Plus la distance est importante, plus la pellicule d'eau est longue entre les dents d'évacuation. Plus la distance est faible, plus la distance d'isolement électrique entre les dents d'évacuation est faible. Une distance comprise entre 80 mm et 150 mm assure un bon compromis.

De préférence, les dents d'évacuation sont orientées verticalement vers le bas lorsque l'armement est en position d'utilisation. Ainsi, les gouttes ruissellent à l'extrémité des dents d'évacuation par gravité ce qui accélère leur évacuation.

De manière préférée, chaque dent d'évacuation comporte une pente distale et une pente proximale, l'angle d'inclinaison de la pente distale par rapport au bord longitudinal inférieur est inférieur à l'angle d'inclinaison de la pente proximale par rapport au bord longitudinal inférieur. Ainsi, les gouttes de pluie qui ruissellent par gravité de la partie distale de la console à sa partie proximale sont guidées par la pente distale et se détachent de la dent à l'extrémité de la dent du fait de la pente proximale abrupte. Une telle dent favorise le détachement des gouttes de pluie à l'extrémité de la dent.

Selon un aspect préféré de l'invention, la console se présentant sous la forme d'une enveloppe longitudinale creuse ouverte par sa partie inférieure de manière à définir deux bords longitudinaux inférieurs, les bords longitudinaux inférieurs comporte chacun une pluralité de dents d'évacuation. L'évacuation des gouttes de pluie est répartie sur les deux bords de manière à limiter la formation de pellicules d'eau de pluie sur lesdits bords longitudinaux inférieurs. De préférence, la console possède une section transversale ayant une forme de U inversé.

De préférence encore, la console comportant une partie inférieure en regard de la caténaire lors de son utilisation, la console comportant au moins une ailette d'isolation électrique s'étendant en saillie vers l'extérieur de la console, au moins une extrémité inférieure de l'ailette d'isolation électrique est convergente de manière à former des moyens d'évacuation de gouttes de pluie.

De manière avantageuse, l'ailette remplit une première fonction d'isolation et une deuxième fonction d'évacuation de gouttes de pluie. Comme l'ailette est intégrée à la console, aucune étape de montage supplémentaire n'est nécessaire. Une extrémité convergente (ou pointue) permet, de manière similaire à une dent d'évacuation, de favoriser le détachement de gouttes de pluie accumulées par l'ailette.

De préférence, l'ailette est orientée verticalement vers le bas lorsque l'armement est en position d'utilisation. Ainsi, les gouttes ruissellent à l'extrémité de l'extrémité convergente par gravité ce qui accélère leur évacuation.

De préférence toujours, l'ailette d'isolation électrique possédant une forme de U, les deux extrémités inférieures de l'ailette sont convergentes de manière à former des moyens d'évacuation de gouttes de pluie.

De manière préférée, la console comporte un matériau composite ce qui permet d'alléger la masse de la console.

L'invention concerne également un dispositif de support d'une caténaire comportant des moyens de support, de préférence un poteau, un armement tel que présenté précédemment comportant une console dont une partie proximale est articulée aux moyens de support et un hauban reliant les moyens de support à la console.

L'invention sera mieux comprise à la lecture de la description qui va suivre, donnée uniquement à titre d'exemple, et se référant aux dessins annexés sur lesquels :
- la figure 1 est une représentation schématique d'un dispositif de support de caténaire selon l'art antérieur (déjà présentée) ;
- la figure 2 est une représentation schématique de côté d'un dispositif de support de caténaire selon l'invention ;
- la figure 3 est une vue rapprochée d'une partie proximale de la console du dispositif de support de caténaire de la figure 2 ; et
- la figure 4 est une vue rapprochée des dents d'évacuation de la figure 3.

Il faut noter que les figures exposent l'invention de manière détaillée pour mettre en oeuvre l'invention, lesdites figures pouvant bien entendu servir à mieux définir l'invention le cas échéant.

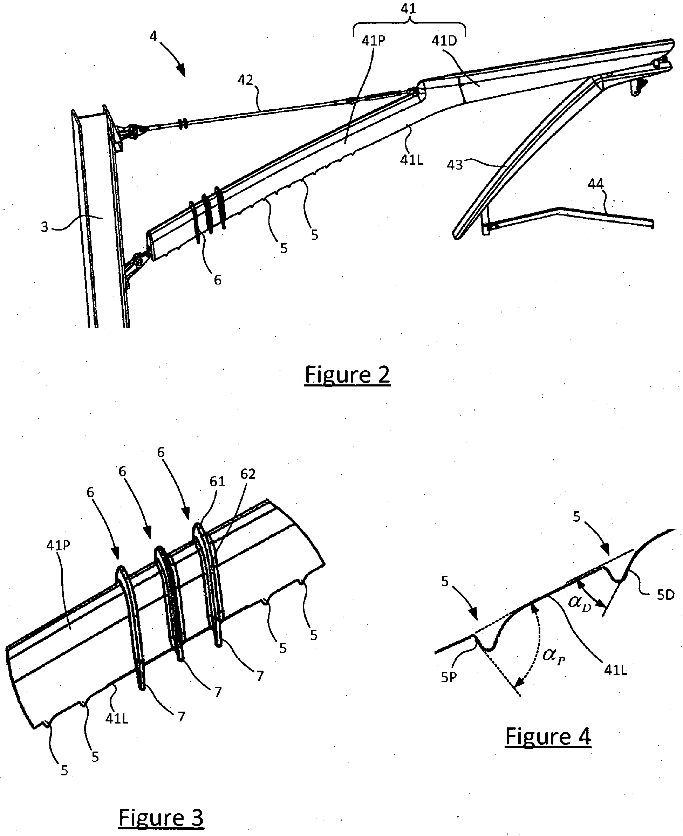

Il est représenté à la figure 2 un dispositif de support de caténaire selon l'invention. De manière similaire à l'art antérieur, le dispositif de support selon l'invention comporte un poteau vertical 3 et un armement caténaire 4 dont une première extrémité est articulée au poteau 3 et dont une deuxième extrémité est reliée à une caténaire (non représentée), en particulier, à un câble porteur de caténaire.

Dans cet exemple, l'armement caténaire 4 comporte de manière classique :
- une console 41 de forme sensiblement longitudinale dont une première extrémité est articulée au poteau 3 et dont une deuxième extrémité libre est adaptée pour être reliée à la caténaire 1,
- un hauban 42 reliant l'extrémité supérieure du poteau 3 à la console 41,
- un antibalaçant 43 monté à l'extrémité libre de la console 41 ; et
- un bras de rappel 44 monté à l'extrémité inférieure de l'antibalançant 43 et adapté pour être relié à une caténaire, en particulier, à son fil de contact.

Comme indiqué précédemment, ce type de dispositif de support de caténaire est connu de l'homme du métier, en particulier par la demande de brevet FR 1054242 de la société SNCF.

Par la suite, comme illustré à la figure 2, la partie de la console 41 la plus proche du poteau 3 est désignée partie proximale 41 P tandis la partie la plus éloignée est désignée partie distale 41D. Selon l'invention, l'armement caténaire 4 comporte des moyens d'évacuation de gouttes de pluie intégrés à la console 41. Autrement dit, les moyens d'évacuation sont formés dans le corps de la console 41 et non rapportés sur ce dernier. Le corps de la console 41 et les moyens d'évacuation forment ainsi un ensemble monobloc ce qui évite toute opération de montage.

Comme représenté sur la figure 2, la console 41 se présente sous la forme d'un élément longitudinal coudé de manière à définir une partie proximale rectiligne 41 P destinée à être reliée au poteau 3 et une partie distale rectiligne 41 D destinée à être reliée à une caténaire.

Dans cet exemple, les moyens d'évacuation de gouttes de pluie sont formés sur la partie proximale 41 P de la console 41 mais il va de soi qu'ils pourraient être formés sur toute partie de la console 41. Ces derniers sont de préférence formés sur toute la longueur de la partie mais ils pourraient également être formés sur une portion limitée de ladite partie.

De préférence, les moyens d'évacuation de gouttes de pluie sont formés sur toute la longueur de la console 41, de sa partie proximale 41 P à sa partie distale 41 D. La présence de moyens d'évacuation de gouttes de pluie sur toute la longueur permet en outre d'améliorer la robustesse de la console 41.

En position d'utilisation, comme représenté sur la figure 2, la partie distale 41 D s'étend sensiblement horizontalement tandis que la partie proximale 41 P s'étend obliquement par rapport aux directions horizontale et verticale. La partie distale 41 D de la console 41 est plus haute que la partie proximale 41 P en position d'utilisation ce qui favorise le ruissellement des gouttes de pluie tombées sur la console 41 de la partie distale 41 D vers la partie proximale 41 P. Aussi, la présence de moyens d'évacuation sur la partie proximale 41 P permet avantageusement d'empêcher la formation d'une pellicule d'eau de pluie sur la partie de la console 41 la plus susceptible d'accumuler des gouttes de pluie.

Dans cet exemple, comme représenté à la figure 2, les moyens d'évacuation sont répartis sur la longueur de la partie proximale 41 P de la console 41 pour empêcher toute accumulation d'eau de pluie. De préférence, les moyens d'évacuation sont formés sur une partie inférieure de la partie proximale 41 P de la console 41, c'est-à-dire, sur la partie de la console 41 qui est orientée vers le bas en position d'utilisation, en regard de la caténaire. En pratique, sous l'effet de la gravité, les gouttes de pluie s'accumulent sur la partie inférieure de la console 41 et y demeurent du fait de leur tension superficielle. La présence de moyens d'évacuation sur la partie inférieure de la console 41 permet avantageusement d'éviter toute accumulation d'eau de pluie et donc toute formation d'arc électrique.

Comme représenté en détails sur la figure 3, la partie proximale 41 P de la console 41 s'étendant longitudinalement, les moyens d'évacuation comportent des dents en saillie depuis la partie longitudinale de la console 41, ici sa partie proximale 41 P. Chaque dent permet avantageusement de rompre la continuité entre des gouttes accumulées longitudinalement sur la console 41. A cet effet, les dents sont désignées par la suite dents d'évacuation 5.

De manière préférée, les dents d'évacuation 5 s'étendent verticalement vers le bas en position d'utilisation de l'armement 4. Autrement dit, les dents d'évacuation 5 s'étendent perpendiculairement à la direction horizontale selon laquelle s'étend la partie distale 41D de la console 41 comme illustré à la figure 2.

Dans cet exemple, la longueur en saillie des dents d'évacuation 5 est comprise entre 10 mm et 20 mm de manière à former un relief sur la console 41 et ainsi favoriser l'accumulation de gouttes de pluie à l'extrémité des dents d'évacuation 5. Dans l'art antérieur, du fait de la tension superficielle des gouttes de pluie, ces dernières pouvaient s'accumuler pour former une pellicule d'eau sur la console 41. La présence de dents d'évacuation 5 permet, d'une part, de guider le ruissellement des gouttes de pluie aux extrémités inférieures des dents d'évacuation 5 et, d'autre part, d'évacuer les gouttes de pluies accumulées au fur et à mesure de leur ruissellement.

Dans cet exemple, les dents d'évacuation 5 sont distantes les unes des autres d'une distance comprise entre 80 mm et 150 mm. Un tel espacement assure un bon compromis entre la masse de la console 41- proportionnelle au nombre de dents d'évacuation 5 - et l'évacuation des gouttes de pluie.

Dans cet exemple, la console 41 se présente sous la forme d'une enveloppe creuse ouverte par sa partie inférieure de manière à définir deux bords longitudinaux inférieurs 41 L comme représenté aux figures 2 et 3. Autrement dit, la console 41 possède une section transversale ayant une forme de U inversé, les bords longitudinaux correspondant aux extrémités des branches du U. Dans cet exemple, les bords longitudinaux inférieurs 41L sont parallèles et comportent chacun une pluralité de dents en saillie 5. Autrement dit, les dents d'évacuation 5 sont en saillie du bord longitudinal 41 L d'une paroi latérale de la console 41. Dans cet exemple, les dents d'évacuation 5 s'étendent dans un même plan, de préférence, dans le plan de la paroi latérale de la console 41 comme représenté sur les figures 3 et 4. De manière préférée, les dents d'évacuation 5 sont issues de la matière de la console 41 et, de préférence, de la paroi latérale de la console 41.

Dans cet exemple, la console 41 comporte un matériau composite isolant du type présenté dans la demande de brevet FR 1054242 de la société SNCF de manière à associer légèreté, isolation électrique et facilité de montage. Il va de soi que l'invention s'applique à tout type de console, en particulier, une console en acier sur laquelle sont rapportés des isolateurs électriques.

De préférence, comme illustré à la figure 4, chaque dent d'évacuation 5 comporte une première pente tournée vers la partie proximale 41 P de la console 41, dite pente proximale 5P, et une deuxième pente 5D tournée vers la partie distale 41 D de la console 41, dite pente distale 5D. De préférence, l'inclinaison *α_{D}* de la pente distale 5D est plus faible que l'inclinaison *α_{P}* de la pente proximale 5P par rapport au bord longitudinal 41 L dont est issu ladite dent d'évacuation 5 en saillie. La faible inclinaison *α_{D}* de la pente distale permet avantageusement de favoriser un ruissellement d'une goutte de pluie sur la pente distale 5D jusqu'à l'extrémité de la dent d'évacuation 5 en évitant que la goutte de pluie ne soit bloquée par la dent d'évacuation 5. Une fois la goutte arrivée à l'extrémité de la dent d'évacuation 5, celle-ci ne peut pas ruisseler sur la pente proximale 5P du fait de sa forte inclinaison *α_{P}*. Il en résulte que la tension superficielle de la goutte de pluie ne permet plus de maintenir la goutte accrochée à la console 41. Celle-ci se détache alors de l'extrémité de la dent d'évacuation 5. Autrement dit, la dent d'évacuation 5 permet avantageusement de « casser » les gouttes de pluie accumulées sur la console 41. A titre d'exemple, l'inclinaison *α_{D}* de la pente distale 5D est de l'ordre de 35 ° tandis que l'incinaison *α_{P}* de la pente proximale 5P est de l'ordre de 90 °. De préférence encore, la longueur de la pente distale 5D est de l'ordre de 35 mm tandis que la longueur de la pente proximale 5P est de l'ordre de 15 mm.

De manière préférée, en référence aux figures 2 à 3, les moyens d'évacuation comportent au moins une ailette d'isolation électrique 6 s'étendant en saillie vers l'extérieur de la console 41. Comme illustré sur la figure 3, les moyens d'évacuation comportent trois ailettes d'isolation 6 qui sont espacées les unes des autres. La forme de l'ailette 6 permet d'augmenter le chemin électrique - la distance curviligne à la surface de la console - entre la caténaire et le poteau afin d'éviter la formation d'arcs électriques.

Dans cet exemple, comme illustré à la figure 3, chaque ailette d'isolation électrique 6 possède une forme de U dont la base horizontale 61 est située sur une paroi supérieure de la console 41 et dont les branches 62 sont formées sur les parois latérales de la console 41 et orientées verticalement vers le bas. Comme représenté sur la figure 3, les extrémités 7 des branches 62 sont convergentes de manière à favoriser l'évacuation de gouttes de pluie. De préférence, les extrémités 7 sont verticales et orientées vers le bas. De manière préférée, les extrémités 7 des branches 62 des ailettes 6 s'étendent plus bas que le bord longitudinal 41L de la console 41 de manière à éviter que les gouttes accumulées par les ailettes 6 ne soient évacuées sur le bord longitudinal 41L de la console 41.

Lors de fortes pluies, les gouttes de pluie qui ruissellent sur la console 41 sont arrêtées longitudinalement par l'ailette d'isolation électrique 6 puis descendent par gravité jusqu'aux extrémités 7 des branches 62 de l'ailette 6 pour être ensuite évacuées.

La présence de moyens d'évacuation répartis sur la longueur de la console 41 permet de limiter de manière efficace le risque d'arcs électriques.

Dans cet exemple, il a été présenté un armement caténaire 4 relié à un poteau vertical 3 mais il va de soi que l'armement caténaire 4 pourrait être relié à tout type de moyen de support, par exemple, un mur vertical ou une barre de support horizontale.

## Revendications

1. Armement (4) de support d'une caténaire comprenant :
- une console (41) dont une partie proximale (41P) est adaptée pour être reliée à des moyens de support, notamment un poteau (3), et dont une partie distale (41 P) est adaptée pour être reliée à une caténaire, la console (41) comportant une partie inférieure en regard de la caténaire lors de son utilisation, et
- des moyens (5, 6) d'évacuation de gouttes de pluie intégrés à la console (41), les moyens d'évacuation (5, 6) comportant une pluralité de dents d'évacuation (5). formés sur la partie inférieure de la console (41)

2. Armement selon la revendication 1, dans lequel les moyens d'évacuation (5, 6) sont formés au moins sur la partie proximale (41 D) de la console (41).

3. Armement selon l'une des revendications 1 et 2, dans lequel la pluralité de dents d'évacuation (5) est en saillie depuis un bord longitudinal inférieur (41 L) de la console (41).

4. Armement selon l'une des revendications 1 à 3, dans lequel les dents d'évacuation (5) sont orientées verticalement vers le bas lorsque l'armement (4) est en position d'utilisation.

5. Armement selon l'une des revendications 1 à 4, dans lequel chaque dent d'évacuation (5) comporte une pente distale (5D) et une pente proximale (5P), l'angle d'inclinaison (*α_{D}*) de la pente distale (5D) par rapport au bord longitudinal inférieur (41 L) est inférieur à l'angle d'inclinaison (*α_{P}*) de la pente proximale (5P) par rapport au bord longitudinal inférieur (41 L).

6. Armement selon l'une des revendications 1 à 5, dans lequel, la console (41) se présentant sous la forme d'une enveloppe longitudinale creuse ouverte par sa partie inférieure de manière à définir deux bords longitudinaux inférieurs (41 L), les bords longitudinaux inférieurs (41 L) comporte chacun une pluralité de dents d'évacuation (5).

7. Armement selon l'une des revendications 1 à 6, dans lequel, la console (41) comportant une partie inférieure en regard de la caténaire lors de son utilisation, la console (41) comportant au moins une ailette d'isolation électrique (6) s'étendant en saillie vers l'extérieur de la console 41, au moins une extrémité inférieure (7) de l'ailette d'isolation électrique (6) est convergente de manière à former des moyens d'évacuation de gouttes de pluie.

8. Armement selon l'une des revendications 1 à 7, dans lequel, l'ailette d'isolation électrique (6) possédant une forme de U, les deux extrémités inférieures (7) de l'ailette sont convergentes de manière à former des moyens d'évacuation de gouttes de pluie.

9. Armement selon l'une des revendications 1 à 8, dans lequel la console (41) comporte un matériau composite.

10. Dispositif de support d'une caténaire comportant des moyens de support, de préférence un poteau (3), un armement (4) selon l'une des revendications précédentes comportant une console (41) dont une partie proximale (41 P) est articulée aux moyens de support et un hauban (42) reliant les moyens de support à la console (41).

## Patentansprüche

1. Bewehrung (4) zur Unterstützung einer Fahrleitung, umfassend:
- eine Konsole (41), von der ein proximaler Teil (41P) dazu vorgesehen ist, mit Stützmitteln, insbesondere einem Pfeiler (3) verbunden zu sein, und von der ein distaler Teil (41P) dazu vorgesehen ist, mit einer Fahrleitung verbunden zu sein, wobei die Konsole (41) einen unteren umfasst, der der Fahrleitung bei ihrer Verwendung gegenüberliegt, und
- Mittel (5, 6) zur Ableitung der Regentropfen, die in die Konsole (41) integriert sind, wobei die Ableitungsmittel (5, 6) eine Vielzahl von Ableitungszähnen (5) umfassen, die auf dem unteren Teil der Konsole (41) ausgebildet sind.

2. Bewehrung nach Anspruch 1, bei der die Ableitungsmittel (5, 6) zumindest auf dem proximalen Teil (41D) der Konsole (41) ausgebildet sind.

3. Bewehrung nach einem der Ansprüche 1 und 2, bei der die Vielzahl von Ableitungszähnen (5) von einem unteren Längsrand (41L) der Konsole (41) vorspringend ist.

4. Bewehrung nach einem der Ansprüche 1 bis 3, bei der die Ableitungszähne (5) vertikal nach unten gerichtet sind, wenn sich die Bewehrung (4) in Verwendungsposition befindet.

5. Bewehrung nach einem der Ansprüche 1 bis 4, bei der jeder Ableitungszahn (5) ein distales Gefälle (5D) und ein proximales Gefälle (5P) umfasst, wenn der Neigungswinkel (α_{D}) des distalen Gefälles (5D) in Bezug zum unteren Längsrand (41L) kleiner als der Neigungswinkel (α_{P}) des proximalen Gefälles (5P) in Bezug zum unteren Längsrand (41L) ist.

6. Bewehrung nach einem der Ansprüche 1 bis 5, bei der, wobei die Konsole (41) in Form einer über ihren unteren Teil offenen hohlen Längshülle vorhanden ist, um zwei untere Längsränder (41L) zu definieren, die unteren Längsränder (41L) jeweils eine Vielzahl von Ableitungszähnen (5) umfassen.

7. Bewehrung nach einem der Ansprüche 1 bis 6, bei der, wobei die Konsole (41) einen unteren Teil gegenüber der Fahrleitung bei ihrer Verwendung umfasst, die Konsole (41) mindestens einen elektrischen Isolierflügel (6) umfasst, der sich nach außen aus der Konsole (41) vorspringend erstreckt, wobei mindestens ein unteres Ende (7) des elektrischen Isolierflügels (6) konvergierend ist, um Mittel zur Ableitung von Regentropfen zu bilden.

8. Bewehrung nach einem der Ansprüche 1 bis 7, bei der, wobei der elektrische Isolierflügel (6) eine U-Form besitzt, die beiden unteren Enden (7) des Flügels konvergierend sind, um Mittel zur Ableitung von Regentropfen zu bilden.

9. Bewehrung nach einem der Ansprüche 1 bis 8, bei der die Konsole (41) ein Verbundmaterial umfasst.

10. Vorrichtung zur Unterstützung einer Fahrleitung, umfassend Stützmittel, vorzugsweise einen Pfeiler (3), eine Bewehrung (4) nach einem der vorhergehenden Ansprüche, umfassend eine Konsole (41), von der ein proximaler Teil (41P) an den Stützmitteln angelenkt ist, wobei ein Haltedraht (42) die Stützmittel mit der Konsole (41) verbindet.

## Claims

1. Fitting (4) for the support of a catenary comprising:
- a console (41) of which a proximal part (41P) is suitable to be connected to means for supporting, in particular a post (3), and of which a distal part (41P) is suited to be connected to a catenary, with the console (41) comprising a lower part facing the catenary when it is being used, and
- means (5, 6) for discharging raindrops integrated into the console (41), the means for discharging (5, 6) comprising a plurality of discharging teeth (5), formed on the lower part of the console (41)

2. Fitting according to claim 1, wherein the means for discharging (5, 6) are formed at least on the proximal part (41D) of the console (41).

3. Fitting according to one of claims 1 and 2, wherein, the plurality of discharging teeth (5) is protruding from a lower longitudinal edge (41L) of the console (41).

4. Fitting according to one of claims 1 to 3, where in the discharging teeth (5) are oriented vertically downwards when the fitting (4) is in position of use.

5. Fitting according to one of claims 1 to 4, wherein each discharge tooth (5) comprises a distal slope (5D) and a proximal slope (5P), the angle of inclination (α_{D}) of the distal slope (5D) with respect to the lower longitudinal edge (41L) is less than the angle of inclination (αₚ) of the proximal slope (5P) with respect to the lower longitudinal edge (41L).

6. Fitting according to one of claims 1 to 5, wherein, the console (41) is presented in the form of a hollow longitudinal envelope open by its lower part in such a way as to define two lower longitudinal edges (41L), the lower longitudinal edges (4L) each comprises a plurality of discharging teeth (5).

7. Fitting according to one of claims 1 to 6, wherein, the console (41) comprising a lower part facing the catenary when it is being used, with the console (41) comprising at least one electrical insulator fin (6) extending as a protrusion towards the outside of the console 41, at least one lower end (7) of the electrical insulator fin (6) is convergent in such a way as to form means for discharging raindrops.

8. Fitting according to one of claims 1 to 7, wherein, the electrical insulator fin (6) having the shape of a U, the two lower ends (7) of the fin are convergent in such a way as to form means for discharging raindrops.

9. Fitting according to one of claims 1 to 8, wherein the console (41) comprises a composite material.

10. Device for supporting a catenary comprising means for supporting, more preferably a post (3), a fitting (4) according to one of the preceding claims comprising a console (41) of which a proximal part (41P) is articulated to the means of supporting and a brace (42) connecting the means for supporting to the console (41).
